Europäisches Patentamt

European Patent Office

Office européen des brevets

(19)

(11) Veröffentlichungsnummer: **0 270 183 B1**

(12) **EUROPÄISCHE PATENTSCHRIFT**

(45) Veröffentlichungstag der Patentschrift: 10.07.91

(51) Int. Cl.⁵: **H05B 41/30**

(21) Anmeldenummer: 87202358.5

(22) Anmeldetag: 30.11.87

(54) Schaltungsanordnung zum Betrieb von Hochdruck-Gasentladungslampen mittels eines impulsförmigen Versorgungsstromes.

(30) Priorität: 02.12.86 DE 3641070

(43) Veröffentlichungstag der Anmeldung:
08.06.88 Patentblatt 88/23

(45) Bekanntmachung des Hinweises auf die
Patenterteilung:
10.07.91 Patentblatt 91/28

(84) Benannte Vertragsstaaten:
BE DE FR GB NL

(56) Entgegenhaltungen:
EP-A- 0 055 995
DE-A- 3 420 229
DE-C- 2 657 824
DE-C- 3 111 561

(73) Patentinhaber: Philips Patentverwaltung
GmbH
Wendenstrasse 35 Postfach 10 51 49
W-2000 Hamburg 1(DE)DE

Patentinhaber: N.V. Philips' Gloeilampenfabrieken
Groenewoudseweg 1
NL-5621 BA Eindhoven(NL)BE FR GB NL

(72) Erfinder: Albach, Manfred, Dr.
An der Höhe 33
W-5100 Aachen(DE)
Erfinder: Stormberg, Hans-Peter, Dr.
Weissdornweg 52
W-5190 Stolberg(DE)
Erfinder: Wegener, Armin
Kleinmarschierstrasse 61
W-5100 Aachen(DE)

(74) Vertreter: Peuckert, Hermann, Dipl.-Ing. et al
Philips Patentverwaltung GmbH Wendenstrasse 35 Postfach 10 51 49
W-2000 Hamburg 1(DE)

## Beschreibung

Die Erfindung bezieht sich auf eine Schaltungsanordnung zum Betrieb von mindestens einer Hochdruck-Gasentladungslampe mittels eines impulsförmigen Versorgungsstromes mit einer Impulsfolgefrequenz zwischen 50 und 2000 Hz und einem Tastverhältnis zwischen 0,2 und 0,8.

Eine derartige Schaltungsanordnung zum Betrieb von Hochdruck-Natriumdampfentladungslampen ist z.B. aus der US-A 41 28 789 bekannt. Ein Impulsbetrieb läßt sich jedoch auch bei Hochdruck-Quecksilberdampfentladungslampen und bei Hochdruck-Metallhalogeniddampfentladungslampen anwenden. Für den Impulsbetrieb kommen sowohl unipolare als auch bipolare Impulse in Frage (DE-C 26 57 824). Ein Vorteil des Impulsbetriebes von Hochdruck-Gasentladungslampen im oben angegebenen Frequenzbereich besteht darin, daß die Lampen mindestens in einem Teil des Frequenzbereiches keine akustische Resonanz aufweisen, welche sich in einem Flackern des Lichtbogens bemerkbar machen würde (DE-C 31 11 561). Aus dieser DE-PS ist es ferner bekannt, akustische Resonanz bei mit einer Hochfrequenzspannung betriebenen Hochdruck-Gasentladungslampen dadurch zu vermeiden, daß der hochfrequenten sinusförmigen Grundwelle von 15 bis 50 KHz ihre dritte Oberwelle überlagert wird. Die Lichtausbeute und Farbtemperatur der Lampen kann bei einem derartigen Betrieb jedoch nicht so günstig wie beim Impulsbetrieb.

Beim Impulsbetrieb von Hochdruck-Gasentladungslampen ist die Stabilisierung des Lampenstromes ausschließlich durch passive Bauelemente, wie z.B. eine Drosselspule, unpraktisch. Die Stromstabilisierung sollte vielmehr auf elektronischem Wege erfolgen.

Beim Impulsbetrieb von Hochdruck-Gasentladungslampen mit elektronischen Vorschaltgeräten tritt jedoch häufig ein sogenanntes Flickern der Lampen auf. Dieses Flickern entsteht dadurch, daß sich der Lichtfluß der Lampe periodisch oder sprunghaft ändert. Zwar bleibt dabei der Lichtbogen selbst stabil, aber die Leuchtdichte der Lampe schwankt in einem solchen Maße, daß das menschliche Auge diese Änderungen wahrnehmen kann.

Der Erfindung liegt daher die Aufgabe zugrunde, eine Schaltungsanordnung zum Impulsbetrieb von Hochdruck-Gasentladungslampen zu schaffen, mit der eine Stabilisierung des Lampenversorgungsstromes erreicht und ein Flickern der Lampen vermieden wird.

Diese Aufgabe wird bei einer Schaltungsanordnung eingangs erwähnter Art gemäß der Erfindung dadurch gelöst, daß den Stromimpulsen ein Strom mit einer Hochfrequenz zwischen 20 und 200 KHz bei einem Modulationsverhältnis zwischen 0,3 und 1 überlagert ist, wobei die Hochfrequenz ein ganzzahliges Vielfaches der Impulsfolgefrequenz ist.

Durch ein hochfrequentes Schalten innerhalb der niederfrequenten Stromimpulse wird eine Stabilisierung des Lampenstromes erreicht. Die hierbei auftretenden Lichtintensitätsschwankungen mit Frequenzen, die der Hochfrequenz und der Impulsfolgefrequenz entsprechen, werden vom menschlichen Auge nicht aufgelöst und sind daher ohne Bedeutung für den Impulsbetrieb von Hochdruck-Gasentladungslampen. Es zeigte sich jedoch, daß ein zusätzliches unperiodisches Flickern oder auch ein periodisches Flickern mit Frequenzen unterhalb von 50 Hz entstehen kann. Es hat sich herausgestellt, daß dieses Flickern vermieden werden kann, wenn man die Impulsfolgefrequenz mit der überlagerten Hochfrequenz synchronisiert. Dies geschieht gemäß der Erfindung dadurch, daß man für die Hochfrequenz ein ganzzahliges Vielfaches der Impulsfolgefrequenz wählt. Hierdurch wird erreicht, daß die Phasenlage der Hochfrequenz zu Beginn eines jeden Stromimpulses konstant gehalten wird.

Eine bevorzugte Ausführungsform einer Schaltungsanordnung nach der Erfindung, bei der im Betriebszustand einer angeschlossenen Lampe die Hochdruck-Gasentladungslampe in Reihe mit einer Drosselspule und einem elektronischen Schaltelement an eine Gleichspannungsquelle angeschlossen und das elektronische Schaltelement mit einer Steuereinrichtung verbunden ist, besitzt das Kennzeichen, daß die Steuereinrichtung einen Hochfrequenzgenerator aufweist, von dem ein Ausgang mit einem Frequenzteiler verbunden ist, der aus der Hochfrequenz ein Signal mit der Impulsfolgefrequenz erzeugt, dessen Tastverhältnis in einer sich an den Frequenzteiler anschließenden monostabilen Kippstufe einstellbar ist. Diese Schaltungsanordnung hat den Vorteil, daß man zur Erzeugung der Hochfrequenz und der niederfrequenten Impulsfolgefrequenz lediglich einen einzigen Generator benötigt. Durch die Anwendung eines Frequenzteilers wird erreicht, den Beginn eines jeden niederfrequenten Stromimpulses mit dem Beginn eines Hochfrequenzimpulses fest zu korrelieren.

Vorzugsweise ist bei dieser Schaltungsanordnung der Ausgang des Hochfrequenzgenerators außerdem mit einem Takteingang einer bistabilen Kippstufe und ein Ausgang der monostabilen Kippstufe mit einem Vorbereitungseingang der bistabilen Kippstufe verbunden, von dem ein Ausgang, gegebenenfalls über einen Verstärker, mit der Steuerelektrode des elektronischen Schaltelementes verbunden ist.

Wenn bei einer solchen Schaltungsanordnung zum Messen und Stabilisieren des Lampenstromes in Reihe mit der Hochdruck-Gasentladungslampe ein Strommeßwiderstand liegt, kann gemäß einer Weiterbildung der Erfindung an einen Rücksetzeingang der bistabilen Kippstufe ein Ausgang eines mit dem Meßwiderstand und einer Referenzspannungsquelle in Verbindung stehenden Komparators angeschlossen sein.

Ausführungsbeispiele nach der Erfindung werden nunmehr anhand der Zeichnung näher erläutert. Es zeigen:

Fig. 1 ein Impulsdiagramm des Stromes, mit dem eine Hochdruck-Gasentladungslampe betrieben werden kann, wobei die unipolaren Stromimpulse von einem höherfrequenten Strom überlagert sind,

Fig. 2 ein Diagramm des Stromes von Hochdruck-Gasentladungslampen, der aus bipolaren Impulsen besteht,

Fig. 3 eine Schaltungsanordnung zum Impulsbetrieb einer Hochdruck-Gasentladungslampe.

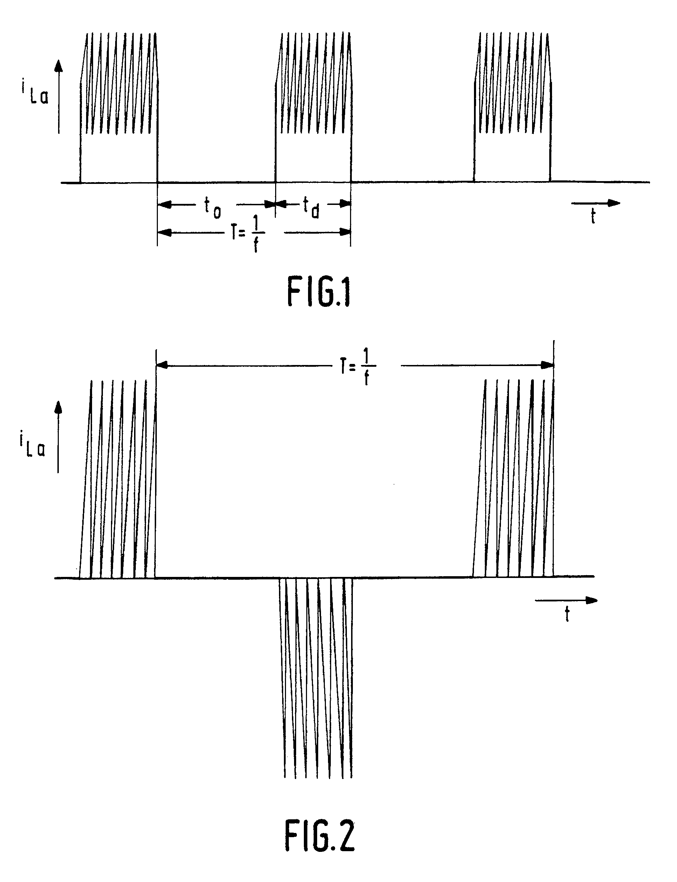

In Fig. 1 ist das Impulsdiagramm eines unipolaren Versorgungsstromes $i_{La}$ einer Hochdruck-Gasentladungslampe dargestellt, wobei T die Impulsperiode, $t_d$ die Impulsbreite der Rechteckimpulse und $t_o$ die Impulspausen sind. Das Tastverhältnis $\delta$ = $t_d/T$ beträgt hierbei etwa 0,4. Die Impulsfolgefrequenz f liegt zwischen 50 und 2000 Hz. Den einzelnen Stromimpulsen ist ein Hochfrequenzstrom zwischen 20 und 200 KHz überlagert. Das Modulationsverhältnis beträgt hierbei etwa 0,5.

Fig. 2 zeigt das Impulsdiagramm eines bipolaren Versorgungsstromes $i_{La}$ einer Hochdruck-Gasentladungslampe. Das Tastverhältnis $\delta$ = $2t_d/T$ beträgt auch hier etwa 0,4. Den niederfrequenten Stromimpulsen ist wiederum ein hochfrequenter Strom überlagert, wobei das Modulationsverhältnis 1 beträgt.

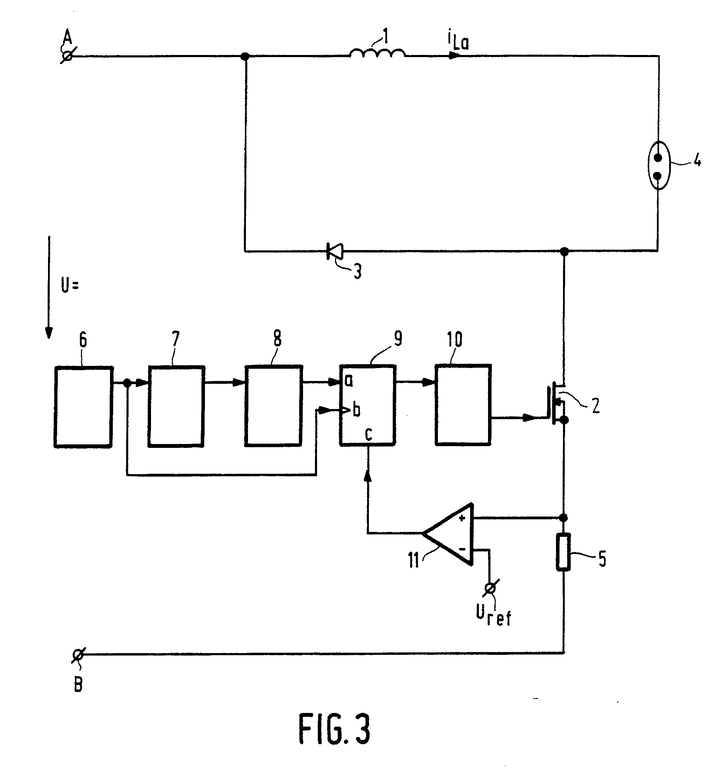

In der Schaltungsanordnung nach Fig. 3 sind mit A und B die Ausgangsklemmen einer Gleichspannungsquelle U=, z.B. eines Schaltnetzteiles, bezeichnet. An die Klemme A schließt sich zunächst ein als Abwärtsspannungswandler arbeitender Durchflußwandler an, der aus einer Drosselspule 1, einem MOS-FET-Schalttransistor 2, einer Freilaufdiode 3 und einer Hochdruck-Gasentladungslampe 4 als Last besteht. An den Durchflußwandler ist ein mit der Lampe 4 in Reihe liegender Strommeßwiderstand 5 angeschlossen, dessen freier Anschluß mit der Klemme B verbunden ist.

Die Steuereinrichtung des Schalttransistors 2 weist einen Hochfrequenzgenerator 6 auf, von dem ein Ausgang mit einem Frequenzteiler 7 verbunden ist, welcher aus der Hochfrequenz ein Signal mit einer niederfrequenten Impulsfolgefrequenz erzeugt, dessen Tastverhältnis in einer sich an den Frequenzteiler 7 anschließenden monostabilen Kippstufe 8 einstellbar ist. Außerdem ist der Ausgang des Hochfrequenzgenerators 6 an einen Takteingang b einer bistabilen Kippstufe 9 und ein Ausgang der monostabilen Kippstufe 8 an einen Vorbereitungseingang a der bistabilen Kippstufe 9 angeschlossen, von dem ein Ausgang über einen Verstärker 10 mit der Steuerelektrode des Schalttransistors 2 verbunden ist. An einen Rücksetzeingang c der bistabilen Kippstufe 9 ist ein Ausgang eines mit dem Meßwiderstand 5 und einer Referenzspannungsquelle $U_{ref}$ in Verbindung stehenden Komparators 11 angeschlossen.

Aus dieser Steuereinrichtung wird nun der Steuerelektrode des Schalttransistors 2 ein Steuersignal zugeführt, das aus der Überlagerung eines niederfrequenten und eines hochfrequenten Signales besteht. Der impulsförmige Lampenversorgungsstrom $i_{La}$ wird dadurch erzeugt, daß der Schalttransistor 2 zunächst mit dem niederfrequenten Signal angesteuert wird. In den Zeiten $t_o$, in denen dieses Signal den Wert 0 besitzt, sperrt der Schalttransistor 2, so daß kein Strom durch die Lampe 4 fließen kann. In den Zeiten $t_d$, in denen das niederfrequente Signal den Wert 1 besitzt, wird der Schalttransistor 2 hochfrequenzmäßig leitend geschaltet.

Um einen möglichst konstanten Lampenstrom zu erhalten, wird der Strom mit Hilfe des Meßwiderstandes 5 gemessen und die entsprechende Meßspannung dem Komparator 11 zugeführt. Überschreitet der Strom und damit die am Meßwiderstand 5 abfallende Meßspannung die am Komparator 11 eingestellte Referenzspannung $U_{ref}$, dann schaltet der Komparator 11 die bistabile Kippstufe 9 über den Rücksetzeingang c um, worauf das Steuersignal für den Schalttransistor 2 wieder den Wert 0 annimmt. Da der Strom durch die Drosselspule 1 stetig sein muß, fließt der Strom jetzt von der Drosselspule 1 über die Lampe 4 und die Freilaufdiode 3. Die während des ansteigenden Stromes in der Drosselspule 1 gespeicherte Energie wird innerhalb der hochfrequenten Sperrzeit des Schalttransistors 2 an die Lampe 4 abgegeben, so daß der Lampenstrom aufrecht erhalten werden kann. Aufgrund der überlagerten Hochfrequenz kann nun sichergestellt werden, daß zu einem Zeitpunkt, bei dem der Drosselspulenstrom noch nicht wesentlich kleiner geworden ist, bereits mit Hilfe eines weiteren Hochfrequenzimpulses die bistabile Kippstufe 9 über den Takteingang b erneut gesetzt und damit der Schalttransistor 2 wieder leitendgeschaltet wird. Der jetzt wieder über die Drosselspule 1, die Lampe 4 und den Schalttransistor 2 fließende Strom steigt erneut an, bis der Spannungsabfall am Meßwiderstand 5 wiederum die Referenzspannung $U_{ref}$ am Komparator 11 überschreitet. Insgesamt wird auf diese Weise ein relativ konstanter Lampenstrom mit überlagerter Hochfrequenz ermöglicht, der erst dann wieder zu Null wird, wenn der Schalttransistor 2 mit dem nächsten niederfrequenten Ausschaltsignal für eine längere Zeit gesperrt wird.

Bei einem praktischen Ausführungsbeispiel war die Lampe 4 eine 30 W-Hochdruck-Natriumdampfentladungslampe. Mit Hilfe des Hochfrequenzgenerators 6 wurde ein hochfrequentes Rechtecksignal von 48 KHz erzeugt, aus dem im Frequenzteiler 7 (160 : 1) die gewünschte Niederfrequenz von 300 Hz abgeleitet wurde. In der monostabilen Kippstufe 8 wurde das für den Lampenbetrieb günstigeTastverhältnis von 0,4 eingestellt. Die bistabile Kippstufe 9 blieb während des niederfrequenten Ausschaltsignales (Zeitbereich $t_0$) gesperrt und wurde während des Einschaltsignales (Zeitbereich $t_d$) wechselseitig vom Hochfrequenzgenerator 6 ein- bzw. vom Komparator 11 ausgeschaltet. Das von der bistabilen Kippstufe 9 gelieferte Signal wurde mit Hilfe eines Verstärkers 10 verstärkt und zur direkten Ansteuerung des Schalttransistors 2 verwendet. Das Modulationsverhältnis war 0,8.

Eine 400 W-Hochdruck-Metallhalogeniddampfentladungslampe wurde auf ähnliche Weise mit einem impulsförmigen Versorgungsstrom mit einer Impulsfolgefrequenz von 1500 Hz und einer aufmodulierten Hochfrequenz von 150 KHz betrieben. Das Tastverhältnis betrug 0,6 und das Modulationsverhältnis 0,3.

Bei beiden Ausführungsbeispielen zeigten die Lampen im Betrieb keine Flickererscheinungen. Die Lampenströme blieben auch bei längerer Betriebsdauer stabil.

## Ansprüche

1.  Schaltungsanordnung zum Betrieb von mindestens einer Hochdruck-Gasentladungslampe (4) mittels eines impulsförmigen Versorgungsstromes mit einer Impulsfolgefrequenz zwischen 50 und 2000 Hz und einem Tastverhältnis zwischen 0,2 und 0,8,
    dadurch gekennzeichnet, daß die Schaltungsanordnung derart ausgebildet ist,daß den Stromimpulsen ein Strom mit einer Hochfrequenz zwischen 20 und 200 KHz bei einem Modulationsverhältnis zwischen 0,3 und 1 überlagert ist, wobei die Hochfrequenz ein ganzzahliges Vielfaches der Impulsfolgefrequenz ist.

2.  Schaltungsanordnung nach Anspruch 1, bei der im Betriebszustand einer angeschlossenen Lampe die Hochdruck-Gasentladungslampe (4) in Reihe mit einer Drosselspule (1) und einem elektronischen Schaltelement an eine Gleichspannungsquelle angeschlossen und das elektronische Schaltelement (2) mit einer Steuereinrichtung verbunden ist,
    dadurch gekennzeichnet, daß die Steuereinrichtung einen Hochfrequenzgenerator (6) aufweist, von dem ein Ausgang mit einem Frequenzteiler (7) verbunden ist, der aus der Hochfrequenz ein Signal mit der Impulsfolgefrequenz erzeugt, dessen Tastverhältnis in einer sich an den Frequenzteiler anschließenden monostabilen Kippstufe (8) einstellbar ist.

3.  Schaltungsanordnung nach Anspruch 2,
    dadurch gekennzeichnet, daß der Ausgang des Hochfrequenzgenerators (6) außerdem mit einem Takteingang (b) einer bistabilen Kippstufe (9) und ein Ausgang der monostabilen Kippstufe (8) mit einem Vorbereitungseingang (a) der bistabilen Kippstufe verbunden ist, von dem ein Ausgang, gegebenenfalls über einen Verstärker (10), mit der Steuerelektrode des elektronischen Schaltelementes (2) verbunden ist.

4.  Schaltungsanordnung nach Anspruch 3, bei der in Reihe mit der Hochdruck-Gasentladungslampe ein Strommeßwiderstand liegt,
    dadurch gekennzeichnet, daß an einen Rücksetzeingang (c) der bistabilen Kippstufe (9) ein Ausgang eines mit dem Meßwiderstand (5) und einer Referenzspannungsquelle ($U_{ref}$) in Verbindung stehenden Komparators (11) angeschlossen ist.

## Claims

1.  A circuit arrangement for the operation of at least one high-pressure gas discharge lamp (4) by means of a pulsatory supply current having a pulse recurrence frequency between 50 and 2000 Hz and a duty cycle between 0.2 and 0.8, characterized in that the circuit arrangement is so constructed that a current having a high frequency of between 20 and 200 kHz is superimposed on the current pulses with a modulation ratio between 0.3 and 1, the high frequency being an integral multiple of the pulse recurrence frequency.

2.  A circuit arrangement as claimed in Claim 1, in which in the operating condition of a connected lamp the high-pressure gas discharge lamp (4) is connected in series with a choke coil (1) and with an electronic switching element to a direct voltage source and the electronic switching element (2) is connected to a control device, characterized in that the control device comprises a high-frequency generator (6), an output of which is connected to a frequency divider (7), which produces from the high frequency a signal having the pulse recurrence frequency, whose duty cycle can be adjusted in a monostable triggering stage (8) connected to the frequency divider.

3.  A circuit arrangement as claimed in Claim 2, characterized in that the output of the high-frequency generator (6) is moreover connected to a clock input (b) of a bistable triggering stage (9) and an output of the monostable triggering stage (8) is connected to a conditioning input (a) of the bistable triggering stage, of which an output is connected, possibly through an amplifier (10), to the control electrode of the electronic switching element (2).

4. A circuit arrangement as claimed in Claim 3, in which a current measuring resistor is connected in series with the high-pressure gas discharge lamp, characterized in that an output of a comparator (11) connected to the measuring resistor (5) and to a reference voltage source ($U_{ref}$) is connected to a reset input (c) of the bistable triggering stage (9).

**Revendications**

1. Dispositif de circuit pour le fonctionnement d'au moins une lampe à décharge dans le gaz à haute pression (4) à l'aide d'un courant d'alimentation en forme d'impulsions présentant une fréquence de répétition d'impulsions comprise entre 50 et 2000 Hz et un taux d'impulsions compris entre 0,2 et 0,8, caractérisé en ce que le dispositif de circuit est formé de façon qu'aux impulsions de courant soit superposé un courant d'une haute fréquence comprise entre 20 et 200 KHz pour un rapport de modulation compris entre 0,3 et 1, la haute fréquence étant un multiple entier de la fréquence de répétition d'impulsions.

2. Dispositif de circuit selon la revendication 1, dans lequel, dans l'état de fonctionnement d'une lampe mise en circuit, la lampe à décharge dans le gaz à haute pression (4) est montée en série avec une bobine de self (1) et un élément de commutation électronique à une source de tension continue et l'élément de commutation électronique (2) à un dispositif de commande, caractérisé en ce que le dispositif de commande présente un générateur haute fréquence (6) dont une sortie est connectée à un diviseur de fréquence (7) qui fournit, à partir de la haute fréquence, un signal présentant la fréquence de répétition d'impulsions dont le taux d'impulsion peut être réglé dans un basculeur monostable (8) connecté au diviseur de fréquence.

3. Dispositif de circuit selon la revendication 2, caractérisé en ce que la sortie du générateur haute fréquence (6) est en outre connectée à une entrée d'impulsions d'horloge (b) d'un basculeur bistable (9) et une sortie du basculeur monostable (8) à une entrée de préparation (a) du basculeur bistable, dont une sortie est connectée, éventuellement par l'intermédiaire d'un amplificateur (10), à l'électrode de commande de l'élément de commutation électronique (2).

4. Dispositif de circuit selon la revendication 3, dans lequel une résistance de mesure de courant est montée en série avec la lampe à décharge dans le gaz à haute pression, caractérisé en ce qu'à une entrée de rétablissement (c) du basculeur bistable (9) est connectée une sortie d'un comparateur (11) connecté à la résistance de mesure (5) et à une source de tension de référence ($U_{ref}$).

FIG.1

FIG.2

FIG. 3